# EUROPEAN PATENT APPLICATION

(11) **EP 3 985 643 A1**
(43) Date of publication of application: **20.04.2022**
(21) Application number: 20822363.6
(22) Date of filing: 16.03.2020
(51) Int. Cl.: G08G 1/16, G01S 13/931, G06T 7/00

(54) **OUTSIDE ENVIRONMENT RECOGNITION DEVICE**

(30) Priority: 14.06.2019 JP 2019111070
(71) Applicant: MAZDA MOTOR CORPORATION, Hiroshima 730-8670 (JP)
(72) Inventor: HORIGOME, Daisuke, Aki-gun, Hiroshima 730-8670 (JP)
(74) Representative: von Tietzen und Hennig, Nikolaus
(86) International application number: PCT/JP2020/011536
(87) International publication number: WO 2020/250526

(57) **Abstract**

A recognition processor (41) recognizes an external environment of a mobile object, based on image data acquired by an imaging unit (11) that takes an image of an external environment of the mobile object. An external environment data generation unit (45) generates external environment data representing the environmental data recognized by the recognition processor (41), based on a recognition result from the recognition processor (41). An abnormality detector (44) detects an abnormality of a data processing system including the imaging unit (11), the recognition processor (41), and the external environment data generation unit (45), based on the abnormality of the external environment data.

## Description

### TECHNICAL FIELD

The technology disclosed herein relates to an external environment recognition device that recognizes an external environment of a mobile object.

### BACKGROUND ART

Patent Document 1 discloses an image processing apparatus to be mounted in a vehicle. The image processing apparatus includes: a road surface detector that detects a road surface area from an input image based on an image taken by a camera; a time-series verifier that performs a time-series verification of a detection result of the road surface area in the input image; a sensing area selector that sets a sensing area for sensing an object in the input image, based on the detection result of the road surface area from the road surface detector and a result of the time-series verification from the time-series verifier; and a sensor that senses the object in the sensing area.

### CITATION LIST

### PATENT DOCUMENT

PATENT DOCUMENT 1: Japanese Unexamined Patent Publication No. 2018-22234

### SUMMARY OF THE INVENTION

### TECHNICAL PROBLEM

Such an apparatus disclosed in Patent Document 1 is provided with a data processing system targeted for abnormality detection, which may be provided with redundancy in order to detect an abnormality thereof. Specifically, a system (so-called dual lockstep system) may be employed. The system is provided with two processing units that perform the same data processing. The same data is input to the two processing units to compare outputs from the two processing units. If the outputs are different from each other, it is determined that the data processing has an abnormality. However, the data processing system provided with redundancy includes a redundant configuration, resulting in an increase in circuit size and a power consumption of the data processing system.

In view of the foregoing background, it is therefore an object of the present disclosure to provide an external environment recognition device capable of reducing the increase in circuit size and power consumption due to addition of an abnormality detection function.

### SOLUTION TO THE PROBLEMS

The technology disclosed herein relates to an external environment recognition device that recognizes an external environment of a mobile object. The external environment recognition device includes: a recognition processor that recognizes an external environment of the mobile object, based on an image data acquired by an imaging unit that takes an image of the external environment of the mobile object; an external environment data generation unit that generates external environment data representing the external environment recognized by the recognition processor, based on a recognition result from the recognition processor; and an abnormality detector that detects an abnormality of a data processing system including the imaging unit, the recognition processor, and the external environment data generation unit, based on an abnormality of the external environment data.

This configuration allows the abnormality of the data processing system targeted for abnormality detection to be detected without providing the data processing system with redundancy. This enables reduction of the increase in circuit size and power consumption due to addition of an abnormality detection function compared with the case where the data processing system targeted for abnormality detection is provided with redundancy.

The external environment data generation unit may include: an integrated data generator that generates integrated data of a movable area and a target which are included in the external environment recognized by the recognition processor, based on the recognition result from the recognition processor; and a two-dimensional data generator that generates two-dimensional data of the movable area and the target which are included in the integrated data, based on the integrated data. The abnormality of the external environment data may be an abnormality of either the integrated data or the two-dimensional data.

With this configuration, the abnormality detector detects the abnormality of the data processing system, based on the abnormality of either the integrated data or the two-dimensional data. The detection of the abnormality of the data processing system, based on the abnormality of the integrated data generated before generation of the two-dimensional data allows quick detection compared with the case where the abnormality of the data processing system is detected based on the abnormality of the two-dimensional data. On the other hand, the detection of the abnormality of the data processing system, based on the abnormality of the two-dimensional data generated after generation of the integrated data allows wide-range detection compared with the case where the abnormality of the data processing system is detected based on the abnormality of the integrated data.

The external environment data generation unit may include an integrated data generator that generates integrated data of a movable area and a target which are included in the external environment recognized by the recognition processor, based on the recognition result from the recognition processor, and a two-dimensional data generator that generates two-dimensional data of the movable area and the target which are included in the integrated data, based on the integrated data. The abnormality of the external environment data may be abnormalities of both the integrated data and the two-dimensional data.

With this configuration, the abnormality detector detects the abnormality of the data processing system, based on the abnormalities of both the integrated data and the two-dimensional data. The abnormality detection processing (processing to detect the abnormality of the data processing system) based on the abnormality of the integrated data and the abnormality detection processing based on the abnormality of the two-dimensional data performed both in this manner allows quick, wide-range detection of the abnormality of the data processing system.

The abnormality of the external environment data may be an abnormality of a temporal change in the external environment represented by the external environment data.

With this configuration, the abnormality detector detects the abnormality of the data processing system, based on the abnormality of the temporal change in external environment represented by the external environment data. The detection of the abnormality of the data processing system, based on the temporal change in the external environment represented in the external environment data allows detection of an abnormality undetectable only from the external environment represented in the external environment data acquired at single time point. This enables improvement in accuracy of the abnormality detection for the data processing system.

The abnormality detector may be configured to detect the abnormality of the data processing system, based on the duration of the abnormality of the external environment data.

With this configuration, the detection of the abnormality of the data processing system based on the duration of the abnormality in the external environment represented by the external environment data allows reduction in excessive detection. This enables an appropriate detection of the abnormality of the data processing system.

### ADVANTAGES OF THE INVENTION

The technology disclosed herein enables reduction of the increase in circuit size and power consumption due to addition of an abnormality detection function.

### BRIEF DESCRIPTION OF THE DRAWINGS

FIG. 1 is a block diagram illustrating a configuration of a mobile object control system according to an embodiment.
FIG. 2 is a block diagram illustrating a configuration of an external environment recognition unit.
FIG. 3 is a flowchart illustrating a basic operation of the external environment recognition unit.
FIG. 4 illustrates image data.
FIG. 5 illustrates a classification result of the image data.
FIG. 6 illustrates a concept of integrated data.
FIG. 7 illustrates two-dimensional data.
FIG. 8 is a graph illustrating a change in data amount of the external environment recognition unit.
FIG. 9 is a flowchart illustrating abnormality detection processing of an abnormality detector.
FIG. 10 illustrates Specific Example 1 of an abnormality of the two-dimensional data.
FIG. 11 illustrates Specific Example 2 of an abnormality of the two-dimensional data.
FIG. 12 illustrates Specific Example 3 of an abnormality of the two-dimensional data.
FIG. 13 illustrates a specific structure of an arithmetic unit.

### DESCRIPTION OF EMBODIMENT

An embodiment will be described in detail below with reference to the drawings. Note that the same or corresponding parts are denoted by the same reference characters in the drawings, and the description thereof will not be repeated. A vehicle control system 10 will be described below as an example mobile object control system that controls an operation of a mobile object.

### (Embodiment)

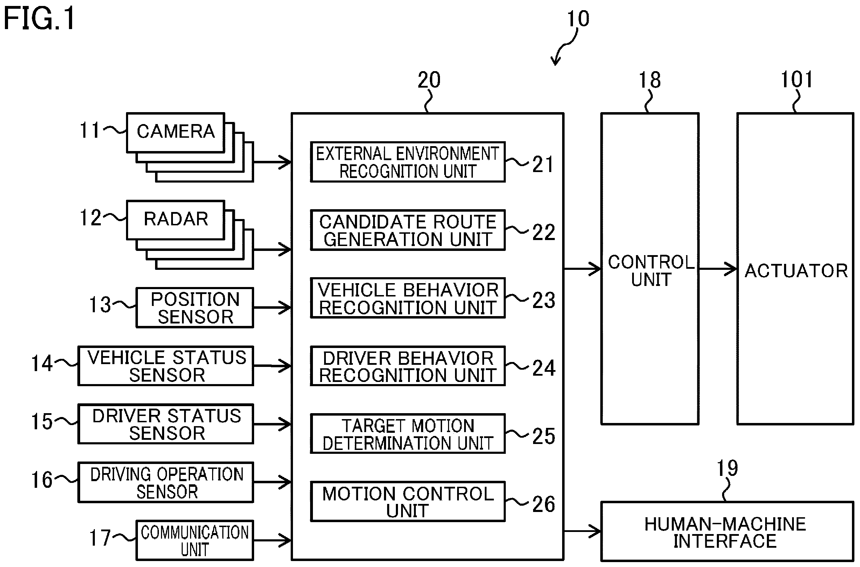

FIG. 1 illustrates a configuration of the vehicle control system 10. The vehicle control system 10 is provided for a vehicle (four-wheeled vehicle in this example) that is an example mobile object. The vehicle can switch among manual driving, assisted driving, and self-driving. In the manual driving, the vehicle travels in accordance with the operations by the driver (e.g., the operations of an accelerator or other elements). In assisted driving, the vehicle travels in accordance with the assistance of the driver's operations. In the self-driving, the vehicle travels without the driver's operations. In the self-driving and assisted driving, the vehicle control system 10 controls an actuator 101 provided for the vehicle to control the operation of the vehicle. The actuator 101 includes the engine, the transmission, the brake, and the steering, for example.

In the following description, the vehicle provided with the vehicle control system 10 is referred to as "the subject vehicle," whereas another vehicle present around the subject vehicle is referred to as "another vehicle (other vehicles)."

In this example, the vehicle control system 10 includes a plurality of cameras 11, a plurality of radars 12, a position sensor 13, a vehicle status sensor 14, a driver status sensor 15, a driving operation sensor 16, a communication unit 17, a control unit 18, a human-machine interface 19, and an arithmetic unit 20. The arithmetic unit 20 is an example external environment recognition device.

### [Camera (Imaging Unit)]

The cameras 11 have the same configuration. The cameras 11 each take an image of an external environment of a subject vehicle to acquire image data representing the external environment of the subject vehicle. The image data acquired by the cameras 11 is transmitted to the arithmetic unit 20. The cameras 11 are each an example imaging unit that takes an image of an external environment of a mobile object.

In this example, the cameras 11 are each a monocular camera having a wide-angle lens. The cameras 11 are disposed on the subject vehicle such that an imaging area of the external environment of the subject vehicle by the cameras 11 covers the entire circumference of the subject vehicle. The cameras 11 are each constituted by a solid imaging element such as a charge-coupled device (CCD) and a complementary metal-oxide-semiconductor (CMOS), for example. The cameras 11 may each be a monocular camera having a commonly used lens (e.g., a narrow-angle lens) or a stereo camera.

### [Radar (Detection Unit)]

The radars 12 have the same configuration. The radars 12 each detect an external environment of the subject vehicle. Specifically, the radars 12 each transmit radio waves (example sensing waves) toward the external environment of the subject vehicle and receive reflected waves from the external environment of the subject vehicle to detect the external environment of the subject vehicle. Detection results from the radars 12 are transmitted to the arithmetic unit 20. The radars 12 are each an example detection unit that detects an external environment of the mobile object. The detection unit transmits the sensing waves toward the external environment of the mobile object and receives reflected waves from the external environment of the mobile object to detect the external environment of the mobile object.

In this example, the radars 12 are disposed on the subject vehicle such that a detecting area of the external environment of the subject vehicle by the radars 12 covers the entire circumference of the subject vehicle. The radars 12 may each be a millimeter-wave radar that transmits millimeter waves (example sensing waves), a lidar (light detection and ranging) that transmits laser light (example sensing waves), an infrared radar that transmits infrared rays (example sensing waves), or an ultrasonic radar that transmits ultrasonic waves (example sensing waves), for example.

### [Position Sensor]

The position sensor 13 detects the position (e.g., the latitude and the longitude) of the subject vehicle. The position sensor 13 receives GPS information from the Global Positioning System and detects the position of the subject vehicle, based on the GPS information, for example. The position of the subject vehicle detected by the position sensor 13 is transmitted to the arithmetic unit 20.

### [Vehicle Status Sensor]

The vehicle status sensor 14 detects the status (e.g., the speed, the acceleration, the yaw rate, and the like) of the subject vehicle. The vehicle status sensor 14 includes a vehicle speed sensor that detects the speed of the subject vehicle, an acceleration sensor that detects the acceleration of the subject vehicle, a yaw rate sensor that detects the yaw rate of the subject vehicle, and other sensors, for example. The status of the subject vehicle detected by the vehicle status sensor 14 is transmitted to the arithmetic unit 20.

### [Driver Status Sensor]

The driver status sensor 15 detects the status (e.g., the health condition, the emotion, the body behavior, and the like) of a driver driving the subject vehicle. The driver status sensor 15 includes an in-vehicle camera that takes an image of the driver, a bio-information sensor that detects bio-information of the driver, and other sensors, for example. The status of the driver detected by the driver status sensor 15 is transmitted to the arithmetic unit 20.

### [Driving Operation Sensor]

The driving operation sensor 16 detects driving operations applied to the subject vehicle. The driving operation sensor 16 includes a steering angle sensor that detects a steering angle of the steering wheel of the subject vehicle, an acceleration sensor that detects an accelerator operation amount of the subject vehicle, a brake sensor that detects a brake operation amount of the subject vehicle, and other sensors, for example. The driving operations detected by the driving operation sensor 16 are transmitted to the arithmetic unit 20.

### [Communication Unit]

The communication unit 17 communicates with an external device provided outside the subject vehicle. The communication unit 17 receives communication information from another vehicle (not shown) positioned around the subject vehicle, traffic information from a navigation system (not shown), and other information, for example. The information received by the communication unit 17 is transmitted to the arithmetic unit 20.

### [Control Unit]

The control unit 18 is controlled by the arithmetic unit 20 to control the actuator 101 provided for the subject vehicle. The control unit 18 includes a powertrain device, a brake device, a steering device, and other devices, for example. The powertrain device controls the engine and transmission included in the actuator 101, based on a target driving force indicated by a driving command value, which will be described later. The brake device controls the brake included in the actuator 101, based on a target braking force indicated by a braking command value, which will be described later. The steering device controls the steering included in the actuator 101, based on a target steering amount indicated by a steering command value, which will be described later.

### [Human-Machine Interface]

The human-machine interface 19 is for inputting/outputting information between the arithmetic unit 20 and an occupant (in particular, a driver) of the subject vehicle. The human-machine interface 19 includes a display that displays information, a speaker that outputs information as sound, a microphone that inputs sound, and an operation unit operated by an occupant (in particular, a driver) of the subject vehicle, and other units, for example. The operation unit is a touch panel or a button.

### [Arithmetic Unit]

The arithmetic unit 20 determines a target route to be traveled by the subject vehicle and a target motion required for the subject vehicle to travel the target route, based on outputs from the sensors provided for the subject vehicle, the information transmitted from outside of the subject vehicle, and the like. The arithmetic unit 20 controls the control unit 18 to control the actuator 101 such that the motion of the subject vehicle matches the target motion. For example, the arithmetic unit 20 is an electronic control unit (ECU) having one or more arithmetic chips. In other words, the arithmetic unit 20 is an electronic control unit (ECU) having one or more processors, one or more memories storing programs and data for operating the one or more processors, and other units.

In this example, the arithmetic unit 20 includes an external environment recognition unit 21, a candidate route generation unit 22, a vehicle behavior recognition unit 23, a driver behavior recognition unit 24, a target motion determination unit 25, and a motion control unit 26. These units are some of the functions of the arithmetic unit 20.

The external environment recognition unit 21 recognizes an external environment of the subject vehicle. The candidate route generation unit 22 generates one or more candidate routes, based on the output from the external environment recognition unit 21. The candidate routes are routes which can be traveled by the subject vehicle, and also candidates for the target route.

The vehicle behavior recognition unit 23 recognizes the behavior (e.g., the speed, the acceleration, the yaw rate, and the like) of the subject vehicle, based on the output from the vehicle status sensor 14. For example, the vehicle behavior recognition unit 23 recognizes the behavior of the subject vehicle based on the output from the vehicle status sensor 14 using a learned model generated by deep learning. The driver behavior recognition unit 24 recognizes the behavior (e.g., the health condition, the emotion, the body behavior, and the like) of the driver, based on the output from the driver status sensor 15. For example, the driver behavior recognition unit 24 recognizes the behavior of the driver based on the output from the driver status sensor 15 using a learned model generated by deep learning.

The target motion determination unit 25 selects a candidate route as a target route from the one or more candidate routes generated by the candidate route generation unit 22, based on the output from the vehicle behavior recognition unit 23 and the output from the driver behavior recognition unit 24. For example, the target motion determination unit 25 selects a candidate route that the driver feels most comfortable with, out of the candidate routes. The target motion determination unit 25 then determines a target motion, based on the candidate route selected as the target route.

The motion control unit 26 controls a control unit 18, based on the target motion determined by the target motion determination unit 25. For example, the motion control unit 26 derives a target driving force, a target braking force, and a target steering amount, which are a driving force, a braking force, and a steering amount for achieving the target motion, respectively. The motion control unit 26 then transmits a driving command value representing the target driving force, a braking command value representing the target braking force, and a steering command value representing the target steering amount, to the powertrain device, the brake device, and the steering device included in the control unit 18, respectively.

### [External Environment Recognition Unit]

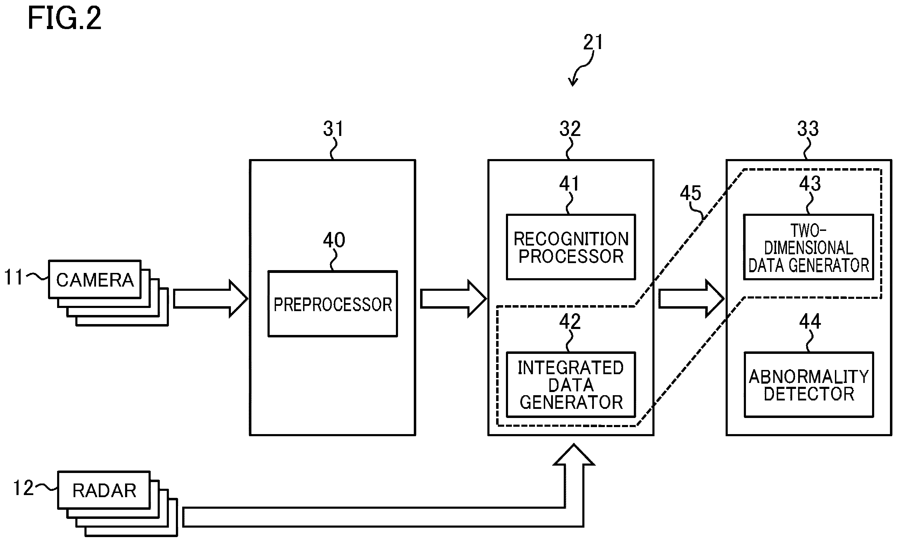

FIG. 2 illustrates a configuration of the external environment recognition unit 21. In this example, the external environment recognition unit 21 includes an image processing chip 31, an artificial intelligence accelerator 32, and a control chip 33. The image processing chip 31, the artificial intelligence accelerator 32, and the control chip 33 each have a processor and a memory storing a program and data for operating the processor, for example.

In this example, the external environment recognition unit 21 includes a preprocessor 40, a recognition processor 41, an integrated data generator 42, a two-dimensional data generator 43, and an abnormality detector 44. These units are some of the functions of the external environment recognition unit 21. In this example, the image processing chip 31 is provided with the preprocessor 40; the artificial intelligence accelerator 32 is provided with the recognition processor 41 and the integrated data generator 42; and the control chip 33 is provided with the two-dimensional data generator 43 and the abnormality detector 44.

### <Preprocessor>

The preprocessor 40 performs preprocessing on the image data acquired by the cameras 11. The preprocessing includes distortion correction processing for correcting the distortion of an image represented in the image data, white balance adjustment processing for adjusting the brightness of the image represented in the image data, and the like.

### <Recognition Processor>

The recognition processor 41 recognizes an external environment of the subject vehicle, based on the image data that has been preprocessed by the preprocessor 40. In this example, the recognition processor 41 outputs a recognition result of the external environment of the subject vehicle, based on the external environment of the subject vehicle recognized based on the image data and detection results from the radars 12 (i.e., the external environment of the subject vehicle detected by the radars 12).

### integrated Data Generator>

The integrated data generator 42 generates integrated data, based on the recognition result from the recognition processor 41. The integrated data is acquired by integrating data on the movable area and the target included in the external environment of the subject vehicle recognized by the recognition processor 41. In this example, the integrated data generator 42 generates integrated data, based on the recognition result from the recognition processor 41.

### <Two-dimensional Data Generator>

The two-dimensional data generator 43 generates two-dimensional data, based on the integrated data generated by the integrated data generator 42. The two-dimensional data is acquired by two-dimensionalizing data on the movable area and the target included in the integrated data.

### <External Environment Data Generation Unit>

In this example, the integrated data generator 42 and the two-dimensional data generator 43 constitute the external environment data generation unit 45. The external environment data generation unit 45 generates external environment data (object data), based on the recognition result from the recognition processor 41. The external environment data represents the external environment of the subject vehicle recognized by the recognition processor 41. In this example, the external environment data generation unit 45 generates external environment data, based on the recognition result from the recognition processor 41.

### <Abnormality Detector>

The abnormality detector 44 detects the abnormality of the data processing system including the cameras 11, the recognition processor 41, and the external environment data generation unit 45, based on the abnormality of the external environment data generated by the external environment data generation unit 45. In this example, the data processing system including the cameras 11, the recognition processor 41, and the external environment data generation unit 45 ranges from the cameras 11 to the two-dimensional data generator 43, through the preprocessor 40, the recognition processor 41, and the integrated data generator 42 in this order. For example, the abnormality detector 44 may be configured to detect the abnormality of the external environment data using a learned model generated by deep learning, in the abnormality detection processing for detecting the abnormality of the data processing system. The learned model is for detecting an abnormality of the external environment data. The abnormality detector 44 may be configured to detect the abnormality of the external environment data by using another known abnormality detection technique.

In this example, the abnormality of the external environment data is an abnormality of either the integrated data or the two-dimensional data. Specifically, in this example, the abnormality detector 44 detects the abnormality of the data processing system, based on the abnormality of either the integrated data or the two-dimensional data.

### [Basic Operation of External Environment Recognition Unit]

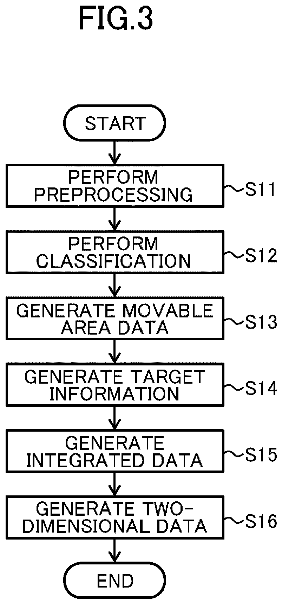

Next, a basic operation of the external environment recognition unit 21 will be described with reference to FIG. 3.

### <Step S11>

First, the preprocessor 40 performs preprocessing on image data acquired by the cameras 11. In this example, the preprocessor 40 performs preprocessing on a plurality of pieces of image data acquired by a plurality of cameras 11. The preprocessing includes distortion correction processing for correcting the distortion of an image represented in the image data (the distortion due to the wider angles of view of the cameras 11 in this example), white balance adjustment processing for adjusting the white balance of the image represented in the image data, and the like. When there is no distortion in the image data acquired by the cameras 11 (e.g., when cameras having a normal lens are used), the distortion correction processing may be omitted.

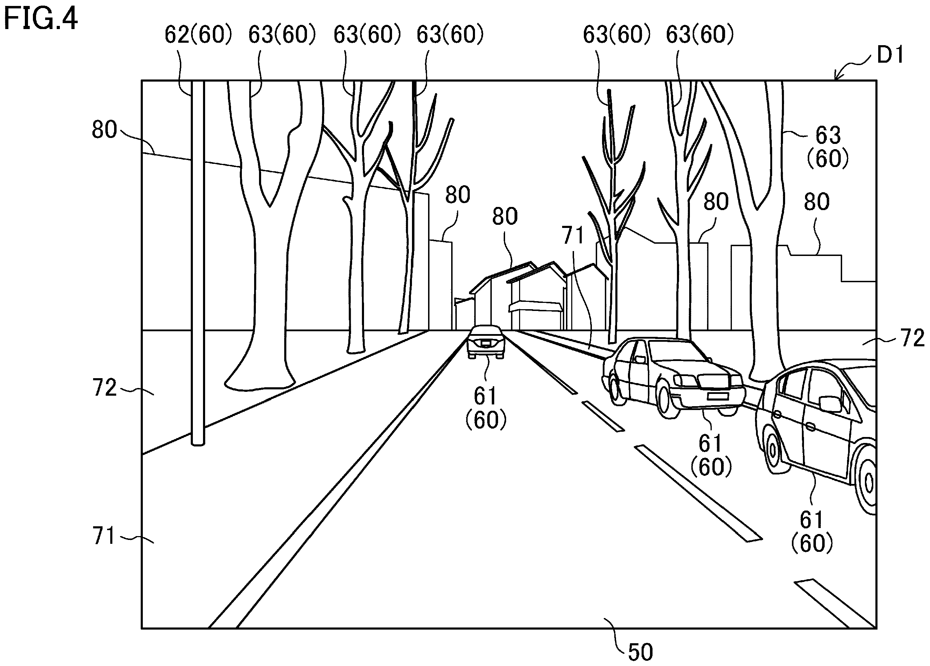

As illustrated in FIG. 4, the external environment of the subject vehicle represented in the image data D1 includes a roadway 50, sidewalks 71, and empty lots 72. The roadway 50 is an example movable area in which the subject vehicle is movable. The external environment of the subject vehicle represented in the image data D1 also includes other vehicles 61, a sign 62, roadside trees 63, and buildings 80. The other vehicles (e.g., four-wheeled vehicles) 61 are example dynamic objects displaced over time. Other examples of the dynamic object include a motorcycle, a bicycle, a pedestrian, and other objects. The sign 62 and the roadside trees 63 are example stationary objects not displaced over time. Other examples of the stationary object include a median strip, a center pole, a building, and other objects. The dynamic and stationary objects are example targets 60.

In the example shown in FIG. 4, the sidewalks 71 are located outside the roadway 50, and the empty lots 72 are located outside the sidewalks 71 (at far ends from the roadway 50). In the example shown in FIG. 4, one of lanes of the roadway 50 is traveled by the subject vehicle and another vehicle 61, and the opposite lane of the roadway 50 is traveled by two other vehicles 61. The sign 62 and the roadside trees 63 are arranged along the outside of the sidewalks 71. The buildings 80 are located in positions far ahead of the subject vehicle.

### <Step S12>

Next, the recognition processor 41 performs classification processing on the image data D1. In this example, the recognition processor 41 performs classification processing on a plurality of pieces of image data acquired by a plurality of cameras 11. In the classification processing, the recognition processor 41 classifies the image represented in the image data D1 on a pixel-by-pixel basis, and adds classification information indicating the result of the classification to the image data D1. By this classification processing, the recognition processor 41 recognizes a movable area and targets in the image represented in the image data D1 (image representing the external environment of the subject vehicle). For example, the recognition processor 41 performs classification processing using a learned model generated by deep learning. The learned model is for classifying the image represented in the image data D1 on a pixel-by-pixel basis. The recognition processor 41 may be configured to perform classification processing by using another known classification technique.

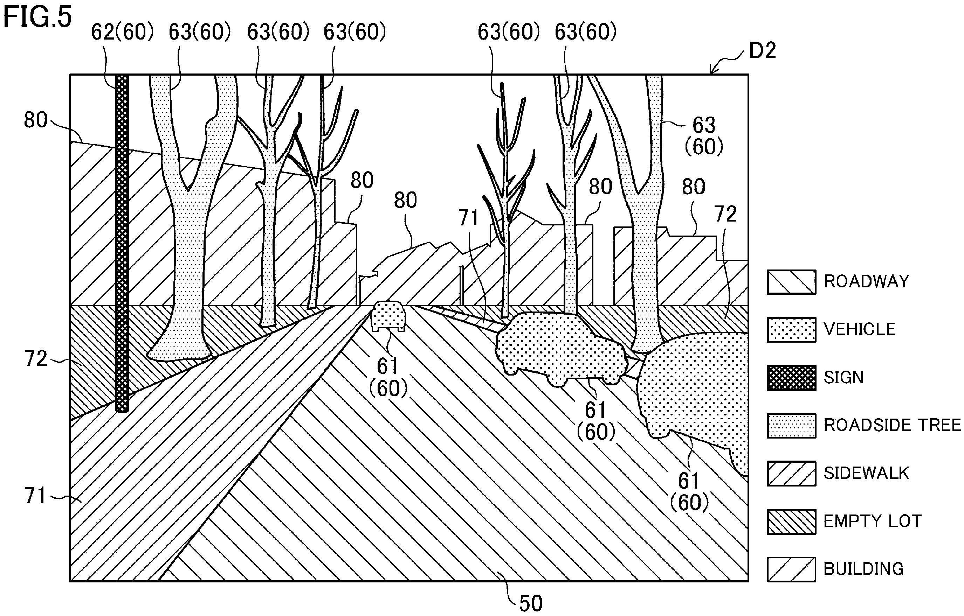

FIG. 5 shows a segmented image D2 illustrating an example of a classification result of the image represented in the image data D1. In the example of FIG. 5, the image represented in the image data D1 is classified into the roadway, the vehicle, the sign, the roadside tree, the sidewalk, the empty lot, and the building on a pixel-by-pixel basis.

### <Step S13>

Next, the recognition processor 41 performs movable area data generation processing on the image data. In the movable area data generation processing, the recognition processor 41 specifies a pixel region classified as a movable area (the roadway 50 in this example) by the classification processing, from the image represented in the image data D1, and generates movable area data, based on the specified pixel region. The movable area data is data (three-dimensional map data in this example) representing a movable area recognized by the recognition processor 41. In this example, the recognition processor 41 generates movable area data, based on a movable area specified in each of the plurality of pieces of image data acquired by the cameras 11 at the same time point. For example, a known three-dimensional data generation technique may be used for the known three-dimensional data generation technique.

### <Step S14>

The recognition processor 41 performs target information generation processing. In the target information generation processing, the recognition processor 41 performs first information generation processing, second information generation processing, and information integration processing.

The first information generation processing is performed on the image data. In this example, the recognition processor 41 performs first information generation processing on a plurality of pieces of image data acquired from a plurality of cameras 11. In the first information generation processing, the recognition processor 41 specifies pixel region classified as a target 60 by the classification processing, form the image represented in the image data D1, and generates target information based on the specified pixel region. When a plurality of targets 60 are recognized from the image represented in the image data D1, the recognition processor 41 performs first information generation processing on each of the targets 60. The target information is information on the target 60, and indicates the kind and shape of the target 60, the distance and direction from the subject vehicle to the target 60, the position of the target 60 relative to the subject vehicle, the magnitude and direction of the relative speed of the target 60 relative to the moving speed of the subject vehicle, and the like. For example, the recognition processor 41 performs first information generation processing using a learned model generated by deep learning. This learned model is for generating target information, based on the pixel region (a pixel region classified as a target 60) specified from the image represented in the image data D1. The recognition processor 41 may be configured to perform first information generation processing using another known information generation technique (target detection technique).

The second information generation processing is performed on outputs from the radars 12. In this example, the recognition processor 41 performs the second information generation processing based on the outputs from a plurality of radars 12. In the second information generation processing, the recognition processor 41 generates target information, based on the detection results from the radars 12. For example, the recognition processor 41 performs analysis processing on the detection results from the radars 12 (the intensity distribution of reflected waves representing the external environment of the subject vehicle), to derive target information (the kind and shape of the target 60, the distance and direction from the subject vehicle to the target 60, the position of the target 60 relative to the subject vehicle, the magnitude and direction of the relative speed of the target 60 relative to the moving speed of the subject vehicle, and the like). The recognition processor 41 may be configured to perform second information generation processing using a learned model generated by deep learning (a learned model for generating target information, based on the detection results from the radars 12), or to perform second information generation processing using another known analysis technique (target detection technique).

In the information integration processing, the recognition processor 41 integrates target information obtained by first information generation processing and target information obtained by second information generation processing, to generate new target information. For example, for each of the parameters (specifically, the kind and shape of the target 60, the distance and direction from the subject vehicle to the target 60, the position of the target 60 relative to the subject vehicle, the magnitude and direction of the relative speed of the target 60 relative to the moving speed of the subject vehicle, and the like) included in the target information, the recognition processor 41 compares the parameter of the target information acquired by the first information generation processing with the parameter of the target information acquired by the second information generation processing, and determines the parameter with higher accuracy between the two parameters as the parameter included in new target information.

### <Step S15>

Next, the integrated data generator 42 integrates the movable area data generated in the Step S13 and the target information generated in the step S14 to generate integrated data D3. The integrated data D3 is data (the three-dimensional map data in this example) generated by integrating pieces of data on the movable area (the roadway 50 in this example) and the target 60 recognized by the recognition processor 41. For example, the integrated data generator 42 may be configured to generate integrated data D3 from the movable area data and the target information by using a known data integration technique.

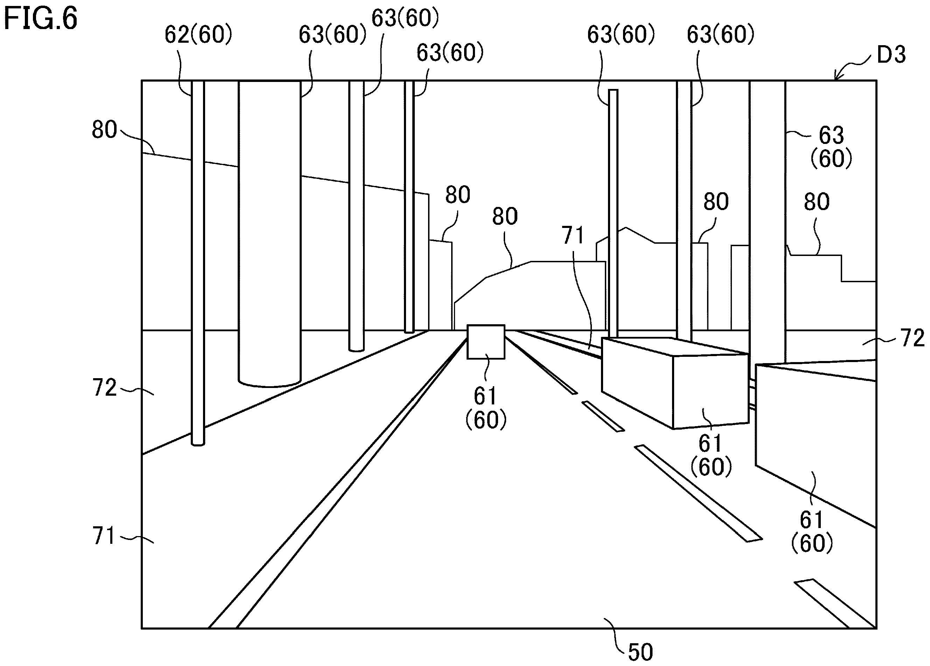

FIG. 6 illustrates a concept of the integrated data D3. As illustrated in FIG. 6, the targets 60 are abstracted in the integrated data D3.

### <Step S16>

Next, the two-dimensional data generator 43 generates two-dimensional data D4 by two-dimensionalizing the integrated data D3. The two-dimensional data D4 is two-dimensional data (the two-dimensional map data in this example) on the movable area (the roadway 50 in this example) and the targets 60 included in the integrated data D3. For example, the two-dimensional data generator 43 may be configured to generate the two-dimensional data D4 from the integrated data D3 by using a known two-dimensional data generation technique.

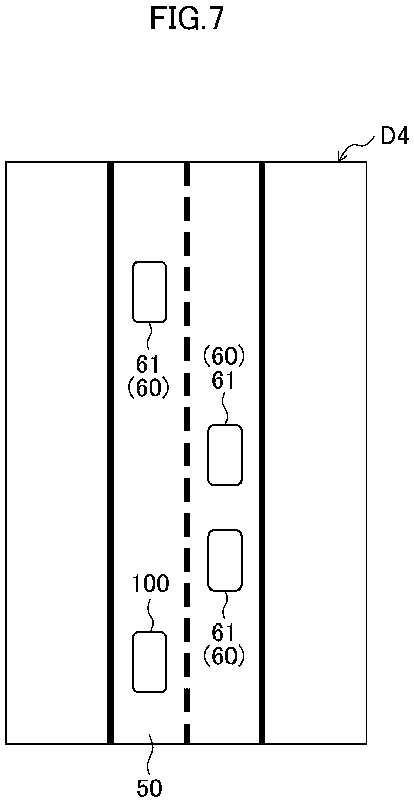

As illustrated in FIG. 7, in the two-dimensional data D4, the movable area (the roadway 50 in this example) and the target 60 (the subject vehicle 100 in this example) are made two-dimensional. In this example, the two-dimensional data D4 corresponds to a bird's-eye view of the subject vehicle 100 (a view looking down the subject vehicle 100 from above). The two-dimensional data D4 includes data on the roadway 50, other vehicles 61, and the subject vehicle 100.

### [Change in Data Amount in External Environment Recognition Unit]

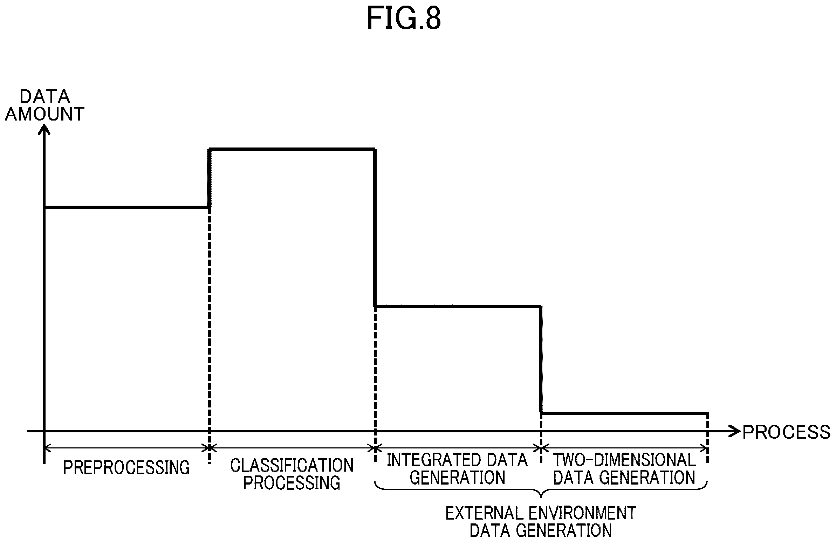

Next, the change in data amount in the external environment recognition unit 21 will be described with reference to FIG. 8.

In response to the classification processing performed by the recognition processor 41 after completion of the preprocessing, the classification information is added to the image data D1. This increases the data amount. Then, in response to completion of the classification processing performed by the recognition processor 41, the image data D1 containing the classification information added by the integrated data generator 42 is converted into the integrated data D3. The external environment (in particular, the target 60) of the subject vehicle is abstracted in the integrated data D3. Thus, the data amount of the integrated data D3 is less than that of the image data D1. Therefore, the conversion of the image data D1 into the integrated data D3 reduces the data amount. Subsequently, in response to completion of generation of the integrated data D3 by the integrated data generator 42, the two-dimensional data generator 43 converts the integrated data D3 into the two-dimensional data D4. The external environment of the subject vehicle represented by the integrated data D3 is two-dimensional in the two-dimensional data D4. Thus, the data amount of the two-dimensional data D4 is less than that of the integrated data D3. Therefore, the conversion of the integrated data D3 into the two-dimensional data D4 further reduces the data amount.

### [Abnormality Detection Processing]

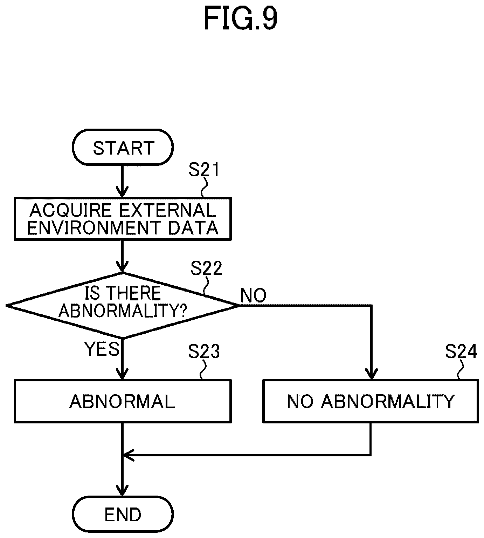

Next, the abnormality detection processing (the processing to detect the abnormality of the data processing system) by the abnormality detector 44 will be described with reference to FIG. 9.

### <Step S21>

First, the abnormality detector 44 acquires the external environment data (the integrated data or the two-dimensional data in this example) generated by the external environment data generation unit 45.

### <Step S22>

Next, the abnormality detector 44 determines whether or not the external environment data has an abnormality. If the external environment data has the abnormality, the Step S23 is performed, and if the external environment data has no abnormality, the Step S24 is performed.

### <Step S23>

If the external environment data has the abnormality, the abnormality detector 44 determines that the data processing system including the cameras 11, the recognition processor 41, and the external environment data generation unit 45 has the abnormality.

### <Step S24>

If the external environment data has no abnormality, the abnormality detector 44 determines that the data processing system including the cameras 11, the recognition processor 41, and the external environment data generation unit 45 has no abnormality.

### [Specific Examples of Abnormality in External Environment Data]

Next, the abnormality of the external environment data will be described. In this example, the abnormality of the external environment data includes a static abnormality of the external environment data and an abnormality of the temporal change in the external environment data (dynamic abnormality). Specifically, in this example, the abnormality detector 44 determines that the data processing system has the abnormality if the external environment data has at least one of the static abnormality or the abnormality of the temporal change in the external environment data, and determines that the data processing system has no abnormality if the external environment data has neither the static abnormality nor the abnormality of the temporal change.

### <Static Abnormality of External Environment Data>

The static abnormality of the external environment data is detected based on the external environment data generated based on the image data acquired at a single time point. Examples of the static abnormality of the external environment data include an abnormality of the data amount of the external environment data, an abnormality of the external environment of the subject vehicle represented in the external environment data, and other abnormalities.

In the abnormality detection processing (the processing to detect the abnormality of the data processing system) based on the abnormality of the data amount of the external environment data, the abnormality detector 44 determines that the data processing system has the abnormality if the data amount of the external environment data deviates from the predetermined normal range, and determines that the data processing system has no abnormality if the data amount does not deviate from the normal range.

In the abnormality detection processing based on the abnormality of the external environment of the subject vehicle represented in the external environment data, the abnormality detector 44 determines that the data processing system has the abnormality if the external environment of the subject vehicle represented in the external environment data is unrealistic, and determines that the data processing system has no abnormality if it is realistic. Examples of the unrealistic external environment of the subject vehicle represented in the external environment data include the case in which the position and/or shape of the roadway 50 included in the external environment of the subject vehicle represented in the external environment data is unrealistic, the case in which the position and/or shape of the target 60 included in the external environment of the subject vehicle represented in the external environment data is unrealistic, the case in which the positions and/or shapes of the roadway 50 and the target 60 included in the external environment of the subject vehicle represented in the external environment data are unrealistic, and other cases. Specific examples thereof include the case in which the width of the roadway 50 deviates from the predetermined roadway width range (e.g., the range from the conceivable minimum width to the conceivable maximum width of the roadway 50), the case in which the widths of other vehicles 61, which are examples of the targets 60, deviate from the predetermined width range (e.g., the range from the conceivable minimum width to the conceivable maximum width of the other vehicles 61), and other cases.

### <Abnormality of Temporal Change in External Environment Data>

The abnormality of temporal change in external environment data is detected based on the plurality of pieces of external environment data generated based on the plurality of pieces of image data acquired at different time points. Examples of the abnormality of the temporal change in the external environment data include an abnormality of temporal change in the data amount of the external environment data, an abnormality of temporal change in the external environment of the subject vehicle represented in the external environment data, and other abnormalities.

In the abnormality detection processing (the processing to detect an abnormality of the data processing system) based on the abnormality of the temporal change in the data amount of the external environment data, the abnormality detector 44 determines that the data processing system has the abnormality if the amount of temporal change (e.g., the amount of change per unit time) in the data amount of the external environment data deviates from a predetermined normal change range, and determines that the data processing system has no abnormality if the amount of temporal change in the data amount of the external environment data does not deviate from the normal change range.

In the abnormality detection processing based on the abnormality of the temporal change in the external environment of the subject vehicle represented in the external environment data, the abnormality detector 44 determines that the data processing system has the abnormality if the temporal change in the external environment of the subject vehicle represented in the external environment data is unrealistic, and determines that the data processing system has no abnormality if it is realistic. Examples of the unrealistic temporal change in the external environment of the subject vehicle represented in the external environment data include the case in which the temporal change in the position and/or shape of the roadway 50 (movable area) included in the external environment of the subject vehicle represented in the external environment data is unrealistic, the case in which the temporal change in the position and/or shape of the target 60 included in the external environment of the subject vehicle represented in the external environment data is unrealistic, the case in which the temporal changes in the positions and/or shapes of the roadway 50 and the targets 60 included in the external environment of the subject vehicle represented in the external environment data are unrealistic, and other cases. Specific examples thereof includes the case in which the amount of temporal change in the width of the roadway 50 exceeds the predetermined upper limit of the amount of change in the roadway width (e.g., the conceivable upper limit of the amount of temporal change in the width of the roadway 50), the case in which the amounts of temporal changes in the widths of other vehicles 61, which are examples of the targets 60, exceed the predetermined upper limit of the amount of temporal change in the vehicle width (e.g., the conceivable upper limit of the amount of temporal change in the widths of other vehicles 61), the case in which the targets 60 such as other vehicles 61 and the sign 62 suddenly disappear and cannot be tracked, and other cases.

### [Causal Relationship of Abnormality]

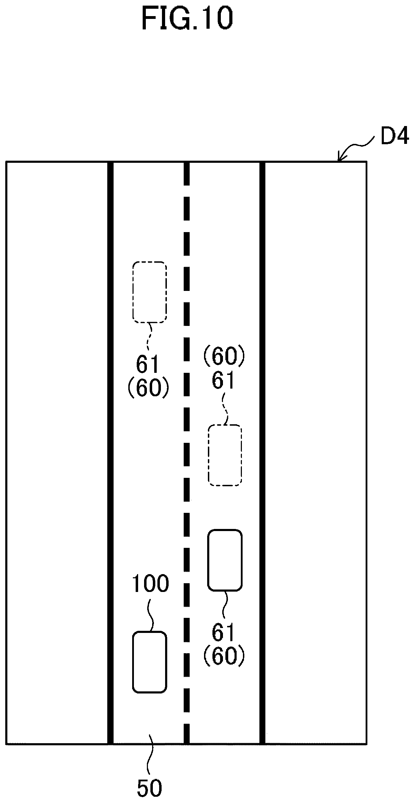

Next, specific examples of the causal relationship between the abnormality of the data processing system and the abnormality of the external environment data will be described with reference to FIGS. 10, 11, and 12.

### <Specific Example 1>

For example, an abnormality caused in a line buffer (not shown) accumulating the image data D1 acquired from the cameras 11 causes stripe-like noises in image data output from the line buffer. In this case, the recognition processor 41 performing recognition processing based on the image data output from the line buffer may omit recognition of the targets 60 or may erroneously recognize the targets 60. This omission of recognition of and erroneous recognition of the targets 60 by the recognition processor 41 may cause disappearance of other vehicles 61 that should be present, from the two-dimensional data D4 generated based on the recognition results from the recognition processor 41 as shown in two-dot chain lines of FIG. 10, by which the vehicles 61 may not be tracked. In this manner, the abnormality caused in the line buffer constituting a part of the data processing system including the cameras 11, the recognition processor 41, and the external environment data generation unit 45 causes an abnormality in the external environment of the subject vehicle represented in the external environment data.

### <Specific Example 2>

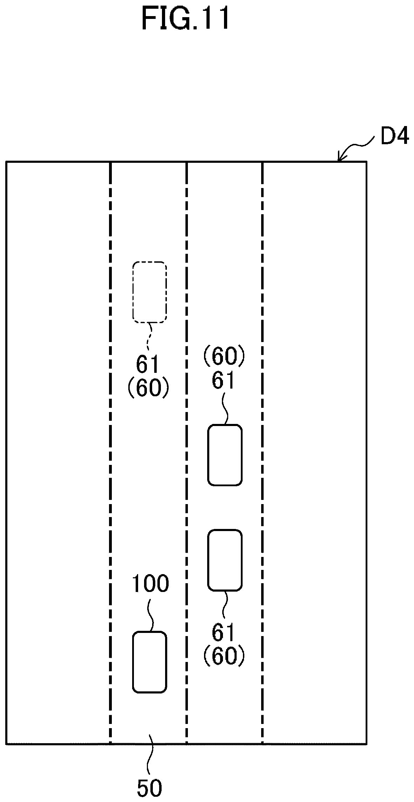

An abnormality of too short exposure time caused in the cameras 11 causes darkness in the entire image represented in the image data acquired from the cameras 11. In this case, lack of the brightness of the image represented in the image data may cause the recognition processor 41 to omit recognition of the roadway 50 (movable area) and the targets 60 or erroneously recognize the roadway 50 and the targets 60. This omission of recognition of and erroneous recognition of the roadway 50 (movable area) and the targets 60 by the recognition processor 41 may cause disappearance of other vehicles 61 that should be present, from the two-dimensional data D4 generated based on the recognition result from the recognition processor 41 as shown in two-dot chain lines of FIG. 11, by which the vehicles 61 cannot be tracked. Further, the boundary of the roadway 50 that should be present disappears from the two-dimensional data D4, by which data on the roadway 50 may not be renewed. In this manner, the abnormality caused in the cameras 11 constituting a part of the data processing system including the cameras 11, the recognition processor 41, and the external environment data generation unit 45 causes an abnormality in the external environment of the subject vehicle represented in the external environment data.

### <Specific Example 3>

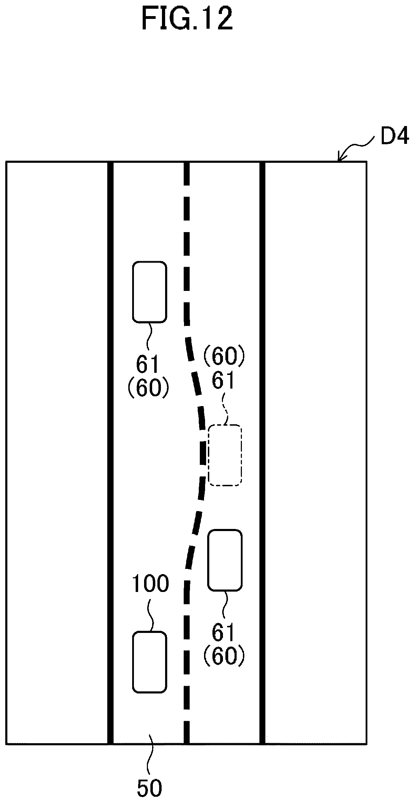

An abnormality in the distortion correction processing performed by the preprocessor 40 causes remaining of a distortion in the image represented in the image data output from the preprocessor 40. This may cause the recognition processor 41 to omit recognition of the roadway 50 (movable area) and the target 60 or erroneously recognize the roadway 50 and the target 60. This omission of recognition of and erroneous recognition of the roadway 50 (movable area) and the targets 60 by the recognition processor 41 may cause disappearance of other vehicles 61 that should be present, from the two-dimensional data D4 generated based on the recognition result from the recognition processor 41 as shown in two-dot chain lines of FIG. 12, by which the vehicles 61 may not be tracked. This may further cause a distortion in the boundary (the lane boundary in the example of FIG. 12) of the roadway 50 represented in the two-dimensional data D4. In this manner, the abnormality caused in the preprocessor 40 constituting a part of the data processing system including the cameras 11, the recognition processor 41, and the external environment data generation unit 45 causes an abnormality in the external environment of the subject vehicle represented in the external environment data.

### [Advantages of Embodiment]

As described above, the arithmetic unit 20 of this embodiment allows the abnormality of the data processing system targeted for abnormality detection to be detected without providing the data processing system with redundancy. This enables reduction of the increase in circuit size and power consumption due to addition of an abnormality detection function compared with the case where the data processing system targeted for abnormality detection is provided with redundancy.

Further, the amount of the external environment data (the integrated data D3 or the two-dimensional data D4) is less than that of the image data D1. The abnormality detection processing (the processing to detect the abnormality of the data processing system) performed by the abnormality detector 44, based on the external environment data allows further reduction in the processing load of the abnormality detector 44 than the abnormality detection processing performed by the abnormality detector 44 based on the image data D1. This enables reduction of at least one of the circuit size or the power consumption of the abnormality detector 44. This further enables the abnormality detector 44 to detect the abnormality of the data processing system more quickly.

In the arithmetic unit 20 of this embodiment, the abnormality detector 44 detects the abnormality of the data processing system, based on the abnormality of either one of the integrated data or the two-dimensional data. The detection of the abnormality of the data processing system, based on the abnormality of the integrated data generated before generation of the two-dimensional data allows quick detection compared with the case where the abnormality of the data processing system is detected based on the abnormality of the two-dimensional data. On the other hand, the detection of the abnormality of the data processing system, based on the abnormality of the two-dimensional data generated after generation of the integrated data allows wide-range detection compared with the case where the abnormality of the data processing system is detected based on the abnormality of the integrated data. Specifically, the abnormality of the data processing system ranging from the cameras 11 (imaging units) to the two-dimensional data generator 43 through the recognition processor 41 and the integrated data generator 42 can be detected.

Further, the detection of the abnormality of the data processing system, based on the abnormality of either one of the integrated data or the two-dimensional data allows reduction in the processing load of the abnormality detector 44 compared with the detection of the abnormality of the data processing system based on abnormalities of both of the integrated data and the two-dimensional data. This enables reduction of at least one of the circuit size or the power consumption of the abnormality detector 44. This further enables the abnormality detector 44 to detect the abnormality of the data processing system more quickly.

Further, in the arithmetic unit 20 of this embodiment, the abnormality detector 44 detects the abnormality of the data processing system, based on the abnormality of the temporal change in the external environment represented in the external environment data. The detection of the abnormality of the data processing system, based on the temporal change in the external environment represented in the external environment data allows detection of an abnormality undetectable only from the external environment represented in the external environment data acquired at single time point. This enables improvement in accuracy of the abnormality detection for the data processing system.

### (First Variation of Embodiment)

The abnormality of the external environment data may be of both the integrated data and the two-dimensional data. Specifically, the abnormality detector 44 may be configured to detect the abnormality of the data processing system, based on the abnormalities of both the integrated data and the two-dimensional data. Specifically, in the first variation of this embodiment, the abnormality detector 44 determines that the data processing system has the abnormality if at least one of the integrated data or the two-dimensional data has an abnormality, and determines that the data processing system has no abnormality if neither the integrated data nor the two-dimensional data has an abnormality. In the first variation, too, the abnormality of the external environment data may include the static abnormality of the external environment data and the abnormality of temporal change in the external environment data (dynamic abnormality).

### [Advantages of First Variation of Embodiment]

In the arithmetic unit 20 of the first variation of the embodiment, the abnormality detector 44 detects the abnormality of the data processing system, based on the abnormalities of both of the integrated data and the two-dimensional data. The abnormality detection processing (processing to detect the abnormality of the data processing system) based on the abnormality of the integrated data and the abnormality detection processing based on the abnormality of the two-dimensional data performed both in this manner allows quick, wide-range detection of the abnormality of the data processing system.

### (Second Variation of Embodiment)

The abnormality detector 44 may be configured to detect the abnormality of the data processing system, based on the duration of the abnormality in the external environment data. Specifically, in the second variation, the abnormality detector 44 determines that the data processing system has the abnormality if the duration of the abnormality in the external environment data exceeds a predetermined normal time, and determines that the data processing system has no abnormality if the duration of the abnormality in the external environment data does not exceed the normal time. In the second variation, too, the abnormality of the external environment data may include the static abnormality of the external environment data and the abnormality of temporal change in the external environment data (dynamic abnormality).

In the second variation, the abnormality detector 44 may be configured to detect the abnormality of the data processing system, based on the abnormalities of both of the integrated data and the two-dimensional data. Specifically, in the second variation of the embodiment, the abnormality detector 44 may be configured to determine that the data processing system has the abnormality if the duration of the abnormality in at least either one of the integrated data or the two-dimensional data exceeds a predetermined normal time, and determine that the data processing system has no abnormality if the duration of the abnormality in each of the integrated data and the two-dimensional data does not exceed the normal time.

### [Advantages of Second Variation of Embodiment]

In the arithmetic unit 20 of the second variation of the embodiment, the abnormality detector 44 detects the abnormality of the data processing system, based on the duration of the abnormality in the external environment represented in the external environment data. This enables a reduction in excessive detection of the abnormality of the data processing system. For example, it is possible to avoid the situation in which the abnormality of the data processing system is erroneously detected when the external environment represented in the external environment data has an abnormality for only a short period of time due to another cause (e.g., instantaneous noise and the like) which is not the abnormality of the data processing system. This enables an appropriate detection of the abnormality of the data processing system.

### (Specific Structure of Arithmetic Unit)

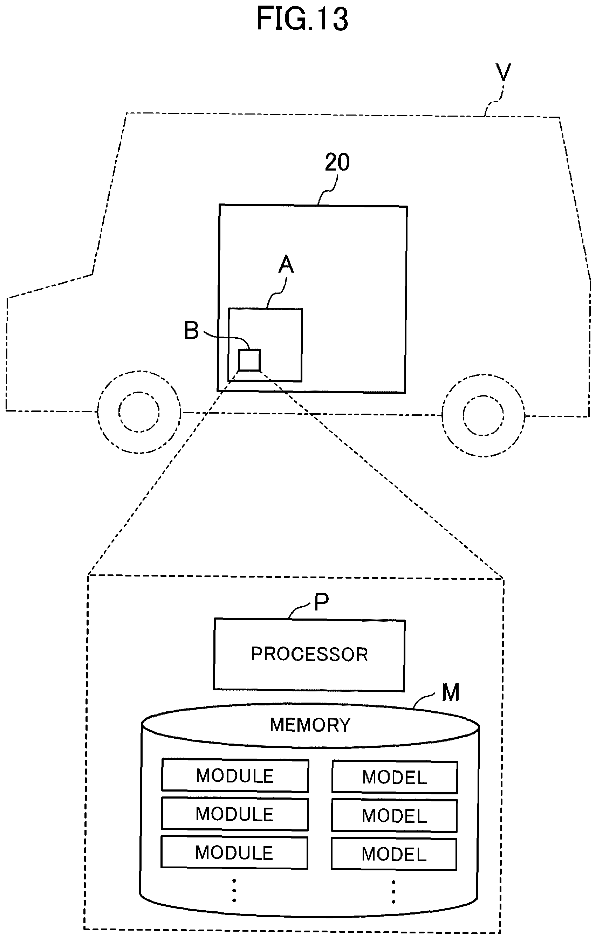

FIG. 13 illustrates a specific structure of the arithmetic unit 20. The arithmetic unit 20 is provided for a vehicle V. The arithmetic unit 20 includes one or more electronic control units (ECUs). The electronic control units each include one or more chips A. The chips A each have one or more cores B. The cores B each include a processor P and a memory M. That is, the arithmetic unit 20 includes one or more processors P and one or more memories M. The memories M each store a program and information for operating the processor P. Specifically, the memories M each store modules each of which is a software program executable by the processor P and data representing models to be used in processing by the processor P, for example. The functions of the units of the arithmetic unit 20 are achieved by the processor P executing the modules stored in the memories M.

### (Other Embodiments)

The above description provides an example of the vehicle (four-wheeled vehicle) as a mobile object, but this is not limiting. For example, the mobile object may be a ship, a train, an aircraft, a motorcycle, an autonomous mobile robot, a vacuum cleaner, a drone, or the like.

Further, the above description provides an example of providing the two-dimensional data generator 43 for a control chip 33, but this is not limiting. For example, the two-dimensional data generator 43 may be provided for an artificial intelligence accelerator 32 or any other arithmetic chip. Similarly, the abnormality detector 44 may be provided for a control chip 33, an artificial intelligence accelerator 32, or any other arithmetic chip. The same applies to other configurations (e.g., the preprocessor 40 and other units) of the external environment recognition unit 21 and other configurations (e.g., the candidate route generation unit 22 and other units) of the arithmetic unit 20.

Further, the above description provides an example configuration in which the external environment recognition unit 21 has an image processing chip 31, an artificial intelligence accelerator 32, and a control chip 33, but this is not limiting. For example, the external environment recognition unit 21 may have two or less arithmetic chips or four or more arithmetic chips. The same applies to other configurations (e.g., the preprocessor 40 and other units) of the external environment recognition unit 21 and other configurations (e.g., the candidate route generation unit 22 and other units) of the arithmetic unit 20.

The foregoing embodiment and variations thereof may be implemented in combination as appropriate. The foregoing embodiment and variations thereof are merely beneficial examples in nature, and are not intended to limit the scope, applications, or use of the present disclosure.

### INDUSTRIAL APPLICABILITY

As can be seen from the foregoing description, the technology disclosed herein is useful as an external environment recognition device that recognizes an external environment of a mobile object.

### DESCRIPTION OF REFERENCE CHARACTERS

- 10: Vehicle Control System (Mobile Object Control System)
- 11: Camera (Imaging Unit)
- 12: Radar (Detection Unit)
- 13: Position Sensor
- 14: Vehicle Status Sensor
- 15: Driver Status Sensor
- 16: Driving Operation Sensor
- 17: Communication Unit
- 18: Control Unit
- 19: Human-Machine Interface
- 20: Arithmetic Unit
- 21: External Environment Recognition Unit
- 22: Candidate Route Generation Unit
- 23: Vehicle Behavior Recognition Unit
- 24: Driver Behavior Recognition Unit
- 25: Target Motion Determination Unit
- 26: Motion Control Unit
- 31: Image Processing Chip
- 32: Artificial Intelligence Accelerator
- 33: Control Chip
- 40: Preprocessor
- 41: Recognition Processor
- 42: Integrated Data Generator
- 43: Two-dimensional Data Generator
- 44: Abnormality Detector
- 45: External Environment Data Generation Unit
- 50: Roadway (Movable Area)
- 60: Target
- 61: Another Vehicle
- 62: Sign
- 63: Roadside Tree
- 71: Sidewalk
- 72: Empty Lot
- 80: Building
- 100: Subject Vehicle (Mobile Object)
- 101: Actuator

## Claims

1. An external environment recognition device that recognizes an external environment of a mobile object, the external environment recognition device comprising:
a recognition processor that recognizes an external environment of the mobile object, based on an image data acquired by an imaging unit that takes an image of the external environment of the mobile object;
an external environment data generation unit that generates external environment data representing the external environment recognized by the recognition processor, based on a recognition result from the recognition processor; and
an abnormality detector that detects an abnormality of a data processing system including the imaging unit, the recognition processor, and the external environment data generation unit, based on an abnormality of the external environment data.

2. The external environment recognition device of claim 1, wherein
the external environment data generation unit includes:
an integrated data generator that generates integrated data of a movable area and a target which are included in the external environment recognized by the recognition processor, based on the recognition result from the recognition processor; and
a two-dimensional data generator that generates two-dimensional data of the movable area and the target which are included in the integrated data, based on the integrated data, and
the abnormality of the external environment data is an abnormality of either the integrated data or the two-dimensional data.

3. The external environment recognition device of claim 1, wherein
the external environment data generation unit includes:
an integrated data generator that generates integrated data of a movable area and a target which are included in the external environment recognized by the recognition processor, based on the recognition result from the recognition processor; and
a two-dimensional data generator that generates two-dimensional data of the movable area and the target which are included in the integrated data, based on the integrated data, and
the abnormality of the external environment data is abnormalities of both the integrated data and the two-dimensional data.

4. The external environment recognition device of any one of claims 1 to 3, wherein
the abnormality of the external environment data is an abnormality of a temporal change in the external environment represented by the external environment data.

5. The external environment recognition device of any one of claims 1 to 4, wherein
the abnormality detector detects the abnormality of the data processing system, based on the duration of the abnormality of the external environment data.
